# EUROPEAN PATENT SPECIFICATION

(11) **EP 0 761 750 B1**
(45) Date of publication and mention of the grant of the patent: **28.11.2001**
(21) Application number: 96112458.3
(22) Date of filing: 01.08.1996
(51) Int. Cl.: C08L 23/02, C08J 9/00, C08L 25/04

(54) **Product made of synthetic plastic material of good mechanical strength and good thermal insulating and soundproofing characteristics, and relative manufacturing method**
Schall- und wärmedämmender Kunststoffgegenstand mit hoher mechanischer Festigkeit und Verfahren zur dessen Herstellung
Produit en matière plastique à haute résistance mécanique, isolant thermique et acoustique, et son procédé de fabrication

(30) Priority: 11.08.1995 IT TO950685
(43) Date of publication of application: 12.03.1997
(73) Proprietor: VALSIR S.p.A., 25078 Vestone (BS) (IT)
(72) Inventor: Abevilli, Fulvio, 43039 Salsomaggiore (IT)
(74) Representative: Plebani, Rinaldo

(56) References cited:
- EP-A- 0 482 740
- GB-A- 2 070 021
- US-A- 4 353 997
- PATENT ABSTRACTS OF JAPAN vol. 016, no. 076 (C-0914), 25 February 1992 & JP-A-03 269028 (NIPPON PETROCHEM CO LTD), 29 November 1991, & DATABASE WPI Section Ch, Week 9203 Derwent Publications Ltd., London, GB; Class A17, AN 92-020270 & JP-A-03 269 028 (NIPPON PETROCHEM CO) , 29 November 1991
- PATENT ABSTRACTS OF JAPAN vol. 016, no. 249 (C-0948), 8 June 1992 & JP-A-04 055440 (SEKISUI CHEM CO LTD), 24 February 1992, & DATABASE WPI Section Ch, Week 9214 Derwent Publications Ltd., London, GB; Class A32, AN 92-111121 & JP-A-04 055 440 (SEKISUI CHEM) , 24 February 1992
- PATENT ABSTRACTS OF JAPAN vol. 017, no. 309 (C-1070), 14 June 1993 & JP-A-05 025308 (FUJIKURA LTD), 2 February 1993, & DATABASE WPI Section Ch, Week 9310 Derwent Publications Ltd., London, GB; Class A17, AN 93-080509 & JP-A-05 025 308 (FUJIKURA)

## Description

The present invention relates to a product made of synthetic plastic material of good mechanical strength, low density, and good thermal insulating and soundproofing characteristics. The product may be injection molded or extruded into any form, typically a pipe, panel or section, but also a seal or industrial coating or film; and the present invention also relates to a method of manufacturing such a product.

Numerous applications, particularly the manufacture of sanitary fittings, require elements, such as pipes, sections, panels, etc., of good mechanical strength, good thermal insulating and soundproofing characteristics, and good flame resistance, and which, in particular, are self-extinguishing and give off little or no toxic or irritating fumes.

At present, no one single material is available incorporating all the above characteristics. Thermosetting resin materials are normally difficult and expensive to manufacture, may give off toxic fumes, and are normally somewhat fragile and therefore unsuited to the above applications. Thermoplastic materials, on the other hand, are cheaper and easier to work, e.g. by injection molding or extrusion, but, even though a satisfactory degree of flame resistance may be achieved using suitable additives, they nevertheless present the drawback of softening when subjected to heat, and, in certain conditions, may give off red-hot spray. Moreover, the mechanical strength of thermoplastic resins is not very good, particularly in applications involving fatigue, such as that induced by cyclic thermal deformation, and normally gets worse in time due to "aging" of the material, which is even further accelerated if the product is exposed to weather and/or sunlight.

Thermal insulation and soundproofing require the use of foam materials, such as those described in GB-A-2 070 021, US-A-4 353 997, JP-A-03 269 028, JP-A-04 055 440 and JP-A-05 025 308, of even poorer mechanical strength, which is why recourse is normally made to multilayer products featuring a supporting structure of compact material, and an insulating or soundproof covering of foam material. Such products, however, are expensive and difficult to produce.

It is an object of the present invention to provide a product made of synthetic thermoplastic material, which is cheap and easy to mold or extrude into pipes, sections or similar, and which at the same time presents good mechanical strength and good thermal insulating and soundproofing characteristics with no need for a multilayer structure.

According to the present invention, there is provided a pipe and/or a pipe fitting made of synthetic plastic material comprising a thermoplastic polymer resin in turn comprising at least one thermoplastic polymer or copolymer selected from the group comprising polyolefins, polystyrenes and mixtures thereof, and an inert filler dispersed uniformly in the resin as defined in claim 1.

Pipes and relative fittings may thus be made which are low-cost, lightweight, flame resistant by adding appropriate nonhalogenated, nontoxic agents, of good soundproofing and thermal insulating properties, and of good mechanical strength which remains unchanged with time.

According to the present invention, there is also provided a method of manufacturing the above pipes and/or pipe fittings as claimed in claim 5.

In other words, underlying the present invention is the idea of combining in the same pipe/fitting i.e. in the same manufacturing process, two known processes formerly used separately: cross-linking; and foaming, either chemically (by adding reagents capable of producing gaseous substances) or physically (by adding inert gases under pressure). Moreover, the two processes are applied for the first time to saturated thermoplastic resins, which in themselves are unsuited to intermolecular cross-linking, and are hot normally used for manufacturing foam materials (with the exception of polystyrene used for packing materials and insulating panels).

Foaming and the use of inert fillers also provide for considerable saving of valuable raw material, i.e. thermoplastic resin, and for enabling the manufacture of low-density, hence lightweight, products which are therefore easy to handle and transport. Three-dimensional cross-linking of the resin, on the other hand, has surprisingly been found to also result in products of good mechanical strength, both absolute and in terms of resistance to fatigue, and highly resistant to aging and softening when subjected to heat. Finally, the products maintain good thermal insulating and soundproofing characteristics, the latter being particularly evident in the case of products such as the drain pipes of sanitary installations.

The thermoplastic resin used according to the invention is a resin comprising a thermoplastic polymer or copolymer, or a mixture of thermoplastic polymers or copolymers selected from the group comprising: polyethylene, polypropylene, polyethylvinyl acetate, polystyrene, acrylonitrile butadiene styrene (ABS), and relative copolymers.

The inert filler, on the other hand, is a natural (e.g. mineral) or synthetic inorganic material, and is preferably selected, for example, from the group comprising: calcium carbonate, barium sulfate, and other mineral substances of similar chemical characteristics, weight, particle size and mechanical resistance.

Depending on the resin and filler used, and particularly on the degree of foaming, the density of the material from which the product according to the invention is made may range between 1.000 and 1.500 gr/cm3; and, to get the full benefit of the present invention, the thermoplastic resin from which the products are made must present, when the product is finished, a cross-linking rate of 80 to 100%.

In addition to the above characteristics, the material from which the product according to the invention is made obviously also includes the usual additives to plastic materials, such as stabilizers, lubricants and plasticizers, as well as nonhalogenated, nontoxic flame extinguishing substances, e.g. Ba SO₄ Blanc Fixe made by Industria Chimica Subalpina S.p.A. - Italy, or BLANC ROC Micro made by MINERALS GIRONA S.A. - Spain, in quantities ranging from 100 to 280 parts by weight per 100 parts of resin.

The products according to the invention are made using substantially conventional processes comprising the steps of:
- mixing the selected thermoplastic polymer resin (or mixture of resins) with the appropriate quantity of inert filler, until the resin is dispersed uniformly in the inert filler or vice versa;
- rendering the thermoplastic resin fluid by heating to a suitable temperature, e.g. 160-220°C; and
- forming the product to the required shape and size from the above mixture, in which the resin is still in the fluid state, using a standard method, e.g. injection molding or extrusion; and solidifying the thermoplastic resin by cooling at ambient temperature.

Unlike known processes, however, according to the present invention, the thermoplastic resin is three-dimensionally cross-linked to form carbon-carbon bonds between atoms of different polymer chains; and, before or during cross-linking and while the resin is still fluid, the entire resin and inert filler mixture is subjected to the action of gaseous substances in expansion to form a solid end material comprising a number of cells uniformly dispersed in the material; which cells are open or closed, depending on the application of the product, and are empty or, in general, filled with air or the foaming gas, e.g. carbon dioxide or nitrogen. Foaming may be effected in known manner by adding chemical foaming agents, e.g. azodicarbonamide A.D.C.M, to the mixture at the mixing stage, or by adding a cylinder-stored compressed gas, e.g. CO₂ or N₂, to the mixture, even at the final forming and cross-linking stage.

Particularly in the case of polyolefin resins which are saturated, cross-linking is normally effected by adding appropriate quantities of chemical cross-linking agents, particularly organic peroxides, to the mixture. Alternatively, cross-linking of the thermoplastic resin may even be effected on the finished product, at any rate on the foamed solid material, by subjecting the product or material to radiation by a high-power electron beam. Finally, polyfunctional chemical compounds, particularly organosiloxane compounds, may be grafted beforehand in known manner to the polymer chains of the selected resin. More specifically, the content of such agents in the chain ranges from 0.500 to 3.000%.

A number of embodiments of the invention will now be described by way of example.

### EXAMPLE 1

Mixes are prepared with the compositions shown in Tables 1 and 2, and are used to extrude pipes of 40 to 315 mm in diameter and 2 to 10 mm thickness, and to injection mold elements such as bends, Y branches, branch pipes and fittings, also of 40 to 315 mm in diameter and 2 to 10 mm thickness.
Cross-linking is effected by adding, at the mixing stage, 1.500 parts per 100 parts of the mixture of
organosiloxane compounds, such as silane or UCARSIL™ by Union Carbide - USA.
Foaming is effected by adding, at the mixing stage, 0.500 parts per 100 parts of the mixture of chemical foaming agents, such as Genitron AC4™ by Schering Polymer Additives - Great Britain.
The finished products present a density of 1.350 gr/cm³ and a weight per unit area of 7 kg/m².
When tested to ASTM D792 (specific weight), D2240 (Shore hardness), D638 (tensile strength and extensibility) and
D2863 (oxygen index), the finished products present a mechanical strength fully comparable with that of similar products with no foaming or cross-linking, and all present good thermal insulating and soundproofing properties.

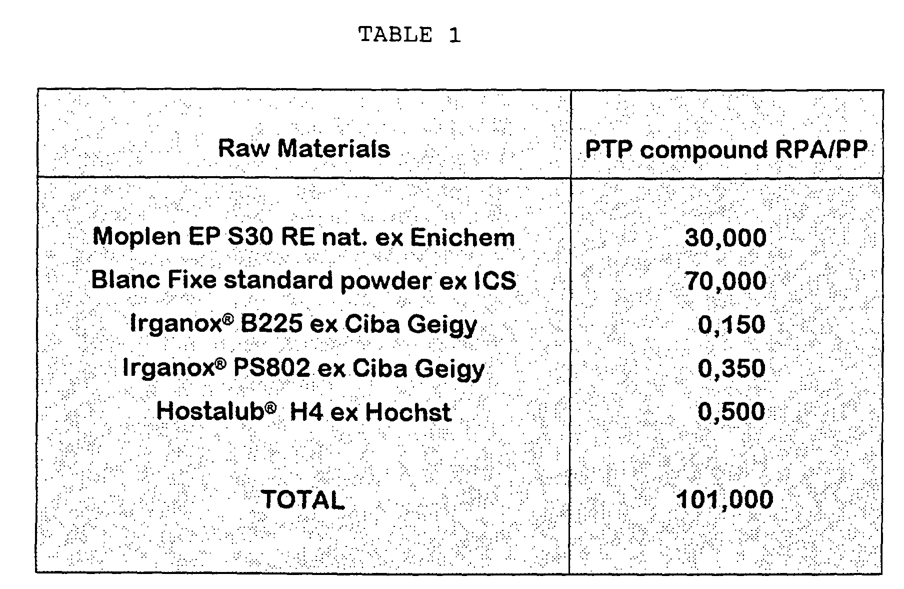

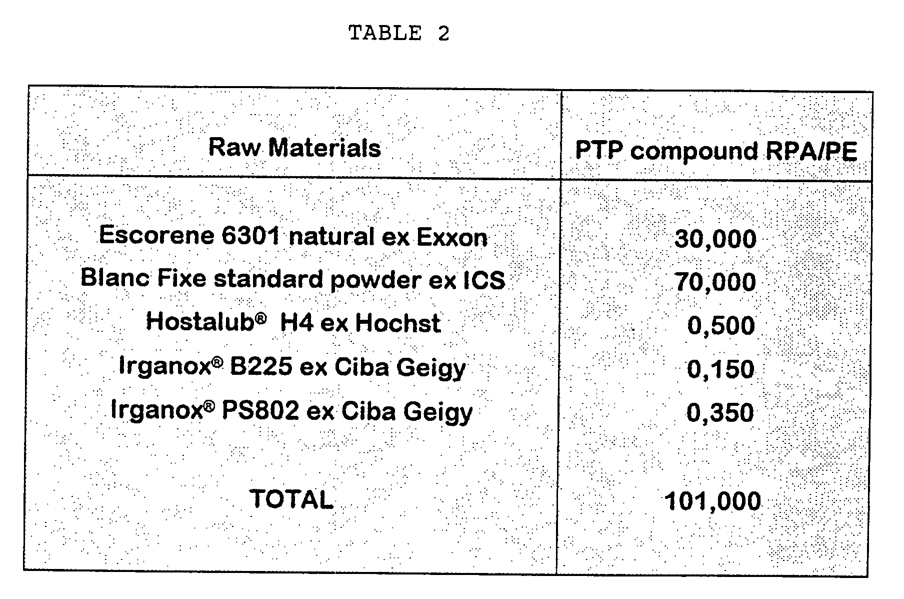

## Claims

1. A plastic pipe and/or pipe fitting being made of synthetic plastic material and comprising a thermoplastic polymer resin in turn comprising at least one thermoplastic polymer or copolymer selected from the group comprising polyolefins, polystyrenes and mixtures thereof, and an inert filler dispersed uniformly in the resin, wherein (a) - said material is a foam material comprising a number of open or closed cells distributed substantially uniformly in the material, and (b) - the resin is cross-linked three-dimensionally;
**characterized in that**, in combination, the density of said material ranges from 1.000 to 1.500 gr/cm³ and said resin presents a cross-linking rate of 80 to 100%.

2. A plastic component as claimed in Claim 1, **characterized in that** said resin comprises a polymer selected from the group comprising: polyethylene, polypropylene, polyethylvinyl acetate, polystyrene and ABS.

3. A plastic component as claimed in Claim 1 or 2, **characterized in that** said inert filler is of natural or synthetic origin, and is preferably selected from the group comprising: calcium carbonate and barium sulfate.

4. A plastic component as claimed in one of the foregoing Claims, **characterized in that** said material includes stabilizing, lubricating, plasticizing and nonhalogenated self-extinguishing additives.

5. A method of manufacturing pipes and/or pipe fittings as defined in one of the foregoing claims, the method comprising the steps of:
(a) - mixing a thermoplastic polymer resin, comprising at least one thermoplastic polymer or copolymer selected from the group comprising polyolefins, polystyrenes and mixtures thereof, with an inert filler until the resin is dispersed uniformly in the inert filler or vice versa;
(b) - rendering the thermoplastic resin fluid; and
(c) - forming said product from said mixture, and solidifying said thermoplastic resin;
(d) - three-dimensionally cross-linking said thermoplastic polymer resin to form carbon-carbon bonds between atoms of different polymer chains; and
(e) - subjecting said mixture, while the resin is still fluid, to the action of gaseous substances in expansion, to form a solid end material comprising a number of cells uniformly dispersed in the material;
**characterized in that** said three dimensionally cross-linking step is carried out in such a way that said resin presents a cross-linking rate of 80 to 100% and said expansion step is carried out in such a way that the density of said material ranges from 1.000 to 1.500 gr/cm³.

6. A method as claimed in Claim 5, **characterized in that** said forming step comprises injection molding.

7. A method as claimed in Claim 5, **characterized in that** said forming step comprises extrusion.

8. A method as claimed in one of the foregoing Claims from 5 to 7,
**characterized by** comprising the step of foaming the mixture, while the resin is still fluid, by adding chemical foaming agents to the mixture.

9. A method as claimed in one of the foregoing Claims from 5 to 7,
**characterized by** comprising the step of foaming the mixture, while the resin is still fluid, by adding a compressed gas to the mixture.

10. A method as claimed in one of the foregoing Claims from 5 to 9,
**characterized in that** said cross-linking step is performed by adding chemical cross-linking agents, in particular organic peroxides, to said mixture.

11. A method as claimed in one of the foregoing Claims from 5 to 9,
**characterized in that** said cross-linking step is performed by subjecting the product to radiation by an electron beam following completion of the foaming step and following solidification of said resin.

12. A method as claimed in one of the foregoing Claims from 5 to 9,
**characterized in that** said cross-linking step is performed using polyfunctional chemical compounds, in particular organosiloxane compounds, grafted beforehand to the polymer chains of said resin.

## Patentansprüche

1. Kunststoffrohr und/oder Rohrformstück aus synthetischem Kunststoff, umfassend ein thermoplastisches Polymermaterial, welches seinerseits mindestens ein thermoplastisches Polymer oder Copolymer, das aus der Polyolefine, Polystyrole und deren Gemische umfassenden Gruppe ausgewählt ist, sowie einen gleichförmig in dem Polymermaterial dispergierten inerten Füllstoff umfaßt, wobei (a) der Kunststoff geschäumt ist und eine Anzahl offener oder geschlossener Zellen aufweist, die in dem Kunststoff im wesentlichen gleichförmig verteilt sind, und (b) das Polymermaterial dreidimensional vernetzt ist, **dadurch gekennzeichnet, daß**, in Kombination, die Dichte des Kunststoffs 1000 bis 1500 g/cm³ beträgt und das Polymermaterial einen Vernetzungsgrad von 80 bis 100% aufweist.

2. Kunststoffteil nach Anspruch 1, **dadurch gekennzeichnet, daß** das Polymermaterial ein aus der Polyethylen, Polypropylen, Polyethylvinylacetat, Polystyrol und ABS umfassenden Gruppe ausgewähltes Polymer umfaßt.

3. Kunststoffteil nach Anspruch 1 oder 2, **dadurch gekennzeichnet, daß** der inerte Füllstoff natürlichen oder synthetischen Ursprungs ist und vorzugsweise aus der Calciumcarbonat und Bariumsulfat umfassenden Gruppe ausgewählt ist.

4. Kunststoffteil nach einem der vorhergehenden Ansprüche, **dadurch gekennzeichnet, daß** der Kunststoff stabilisierende, Schmiermitteleigenschaften aufweisende, weichmachende und nicht-halogenierte, selbstverlöschende Zusätze enthält.

5. Verfahren zur Herstellung von Rohren und/oder Rohrformstücken gemäß einem der vorhergehenden Ansprüche, wobei das Verfahren die folgenden Schritte umfaßt:
(a) ein thermoplastisches Polymermaterial, das mindestens ein thermoplastisches Polymer oder Copolymer, ausgewählt aus der Polyolefine, Polystyrole und deren Gemische umfassenden Gruppe, umfaßt, wird mit einem inerten Füllstoff vermischt, bis das Polymermaterial gleichförmig in dem inerten Füllstoff, oder umgekehrt, dispergiert ist;
(b) das thermoplastische Polymermaterial wird fließfähig gemacht; und
(c) das Erzeugnis wird aus dem Gemisch geformt und das thermoplastische Polymermaterial wird verfestigt;
(d) das thermoplastische Polymermaterial wird dreidimensional vernetzt unter Bildung von Kohlenstoff-Kohlenstoff-Bindungen zwischen Atomen verschiedener Polymerketten; und
(e) das Gemisch wird, während das Polymermaterial noch fließfähig ist, der Einwirkung gasförmiger, expandierender Substanzen unterworfen, wodurch ein festes Endmaterial gebildet wird, das eine Anzahl von gleichförmig in dem Material verteilten Zellen umfaßt;
**dadurch gekennzeichnet, daß** der Schritt der dreidimensionalen Vernetzung derart durchgeführt wird, daß das Polymermaterial einen Vernetzungsgrad von 80 bis 100% aufweist, und der Schritt der Expansion derart durchgeführt wird, daß die Dichte des Materials 1000 bis 1500 g/cm³ beträgt.

6. Verfahren nach Anspruch 5, **dadurch gekennzeichnet, daß** der Schritt des Formens ein Spritzgießen umfaßt.

7. Verfahren nach Anspruch 5, **dadurch gekennzeichnet, daß** der Schritt des Formens eine Extrusion umfaßt.

8. Verfahren nach einem der Ansprüche 5 bis 7, **dadurch gekennzeichnet, daß** das Gemisch, während das Polymermaterial noch fließfähig ist, durch Zugabe chemischer Schäummittel zu dem Gemisch geschäumt wird.

9. Verfahren nach einem der Ansprüche 5 bis 7, **dadurch gekennzeichnet, daß** das Gemisch, während das Polymermaterial noch fließfähig ist, durch Zugabe eines komprimierten Gases zu dem Gemisch geschäumt wird.

10. Verfahren nach einem der Ansprüche 5 bis 9, **dadurch gekennzeichnet, daß** das Vernetzen durch Zugabe chemischer Vernetzungsmittel, insbesondere organischer Peroxide, zu dem Gemisch durchgerührt wird.

11. Verfahren nach einem der Ansprüche 5 bis 9, **dadurch gekennzeichnet, daß** das Vernetzen durch Bestrahlen des Produkts mit einem Elektronenstrahl nach der Beendigung des Schrittes der Ausschäumung und nach der Verfestigung des Polymermaterials durchgeführt wird.

12. Verfahren nach einem der Ansprüche 5 bis 9, **dadurch gekennzeichnet, daß** das Vernetzen unter Verwendung polyfunktioneller chemischer Verbindungen, insbesondere von Organosiloxan-Verbindungen, die zuvor den Polymerketten des Polymermaterials aufgepfropft wurden, durchgeführt wird.

## Revendications

1. Tuyau et/ou un raccord de tuyau en plastique constitué d'une matière plastique synthétique et comprenant une résine polymère thermoplastique comprenant à son tour au moins un polymère ou copolymère thermoplastique sélectionné à partir du groupe comprenant les polyoléfines, les polystyrènes et des mélanges de ceux-ci, et une matière de charge inerte dispersée de façon uniforme dans la résine, dans lequel (a) - ladite matière est une matière en mousse comprenant un certain nombre de cellules ouvertes ou fermées réparties de façon substantiellement uniforme dans la matière, et (b) - la résine est réticulée de façon tri-dimensionnelle; **caractérisé en ce que**, en combinaison, la densité de ladite matière se situe dans une gamme allant de 1,000 à 1,500 gr/cm³ et **en ce que** ladite résine présente un taux de réticulation allant de 80 à 100 %.

2. Composant en plastique selon la revendication 1, **caractérisé en ce que** ladite résine comprend un polymère sélectionné à partir du groupe comprenant: le polyéthylène, le polypropylène, l'acétate de polyéthylvinyle, le polystyrène et l'ABS.

3. Composant en plastique selon la revendication 1 ou 2, **caractérisé en ce que** ladite matière de charge inerte est d'origine naturelle ou synthétique, et est de préférence sélectionnée à partir du groupe comprenant: le carbonate de calcium et le sulfate de baryum.

4. Composant en plastique selon l'une quelconque des revendications qui précèdent, **caractérisé en ce que** ladite matière comprend des additifs de stabilisation, de lubrification, de plastification ainsi que des additifs non halogénés autoextinguibles.

5. Procédé de fabrication de tuyaux et/au de raccords de tuyaux tels que définis dans l'une quelconque des revendications qui précèdent, le procédé comprenant les étapes suivantes:
(a) - mélanger une résine polymère thermoplastique, comprenant au moins un polymère ou copolymère thermoplastique sélectionné à partir du groupe comprenant les polyoléfines, les polystyrènes et des mélanges de ceux-ci, avec une matière de charge inerte jusqu'à ce que la résine soit dispersée de façon uniforme dans la matière de charge inerte ou vice-versa;
(b) - rendre la résine thermoplastique fluide; et
(c) - façonner ledit produit à partir dudit mélange, et solidifier ladite résine thermoplastique;
(d) - effectuer la réticulation tri-dimensionnelle de ladite résine polymère thermoplastique afin de former des liaisons carbone - carbone entre des atomes de chaînes de polymères différentes; et
(e) - soumettre ledit mélange, alors que la résine est toujours à l'état fluide, à l'action de substances gazeuses en expansion, afin de former une matière finale solide comprenant un certain nombre de cellules dispersées de façon uniforme dans la matière;
**caractérise en ce que** ladite étape de rêticulation tri-dimensionnelle est exécutée d'une manière telle que ladite résine présente un taux de réticulation allant de 80 à 100 % et **en ce que** ladite étape d'expansion est exécutée d'une manière telle que la densité de ladite matière se situe dans une gamme allant de 1,000 à 1,500 gr/cm³.

6. Procédé selon la revendication 5, **caractérisé en ce que** ladite étape de façonnage comprend un moulage par injection.

7. Procédé selon la revendication 5, **caractérisé en ce que** ladite étape de façonnage comprend une extrusion.

8. Procédé selon l'une quelconque des revendications 5 à 7 qui précèdent, **caractérisé en ce qu'**il comprend l'étape de moussage du mélange, alors que la résine est toujours fluide, en ajoutant des agents moussants chimiques au mélange.

9. Procédé selon l'une quelconque des revendications 5 à 7 qui précèdent, **caractérisé en ce qu'**il comprend l'étape de moussage du mélange, alors que la résine est toujours fluida, en ajoutant un gaz sous pression au mélange.

10. Procédé selon l'une quelconque des revendications 5 à 9 qui précèdent, **caractérisé en ce que** ladite étape de réticulation est exécutée en ajoutant des agents chimiques de réticulation, en particulier des peroxydes organiques, audit mélange.

11. Procédé selon l'une quelconque des revendications 5 à 9 qui précèdent, **caractérisé en ce que** ladite étape de réticulation est exécutée en soumettant le produit à une irradiation par un faisceau d'électrons suivant la réalisation de l'étape de moussage et suivant la solidification de ladite résine.

12. Procédé selon l'une quelconque des revendications 5 à 9 qui précèdent, **caractérisé en ce que** ladite étape de rêticulation est exécutée en utilisant des composés chimiques poly-fonctionnels, en particulier des composés d'organosiloxane, insérés au préalable dans les chaînes de polymères de ladite résine.
